# EUROPÄISCHE PATENTSCHRIFT

(11) **EP 3 551 423 B1**
(45) Veröffentlichungstag und Bekanntmachung des Hinweises auf die Patenterteilung: **29.05.2024**
(21) Anmeldenummer: 17826131.9
(22) Anmeldetag: 12.12.2017
(51) Int. Cl.: B29C 63/26

(54) **VORRICHTUNG ZUR ANSTEUERUNG EINER STRAHLUNGSQUELLE ZUM AUSHÄRTEN VON AUSKLEIDUNGSSCHLÄUCHEN, VERFAHREN, VERWENDUNG**
DEVICE FOR CONTROLLING A RADIATION SOURCE FOR HARDENING LINING TUBES, METHOD AND USE
DISPOSITIF POUR COMMANDER UNE SOURCE DE RAYONNEMENT EN VUE DU DURCISSEMENT DE GAINES DE REVÊTEMENT, PROCÉDÉ ET UTILISATION

(30) Priorität: 12.12.2016 DE 102016124116
(43) Veröffentlichungstag der Anmeldung: 16.10.2019
(73) Patentinhaber: RelineEurope AG, 76865 Rohrbach (DE)
(72) Erfinder: WIND, Herbert, 76857 Albersweiler (DE)
(74) Vertreter: Dr. Langfinger & Partner
(86) Internationale Anmeldenummer: PCT/DE2017/101067
(87) Internationale Veröffentlichungsnummer: WO 2018/108209

(56) Entgegenhaltungen:
- EP-A1- 2 088 837
- WO-A1-2008/055366
- WO-A1-2014/114572
- CN-U- 202 929 509
- JP-A- 2001 332 712

## Beschreibung

Die vorliegende Erfindung betrifft eine Vorrichtung zur Ansteuerung einer Strahlungsquelle zum Aushärten von Auskleidungsschläuchen.

Zur Inspektion, Wartung und Sanierung von Leitungen, Kanalsystemen, und dergleichen werden oftmals Vorrichtungen in die Leitungen eingeführt, um die erforderlichen Messvorgänge und/oder mechanischen Sanierungsarbeiten auszuführen. Zur Messung der Ist-Situation einer Leitung weisen die Vorrichtungen meist Kamerasysteme auf, um den Zustand der Leitung zu visualisieren.

Wird ein Defekt oder eine Beschädigung erkannt, kann der entsprechende Abschnitt des Leitungssystems durch neue Abschnitte ersetzt werden. Dies ist jedoch in der Regel sehr aufwendig.

Alternativ sind Verfahren im Stand der Technik bekannt, bei denen zur Sanierung von Leitungssystemen, z.B. von Kanälen und ähnlichen Rohrsystemen, eine flexible, mit einer mit härtbarem Harz getränkten aushärtbaren Lage, die als Auskleidungsschlauch oder auch als Liner bezeichnet wird, in das Leitungssystem eingeführt wird. Nach dem Einführen wird der Auskleidungsschlauch aufgeweitet, so dass er sich eng an die Innenwand des Leitungssystems anschmiegt. Anschließend wird das Harz ausgehärtet.

Die Herstellung eines derartigen Auskleidungsschlauches ist beispielsweise in der WO 95/04646 beschrieben. Als härtbare Harze werden nach den bekannten Verfahren vorzugsweise ungesättigte Polyesterharze, Vinylesterharze oder Epoxidharze verwendet, die beispielsweise in Styrol und/oder einem Acrylester gelöst sein können

Diese ungesättigten Polyester- oder Vinylester können thermisch (üblicherweise durch Peroxidkatalysatoren) oder mittels Strahlung, z. B durch UV-Licht mit Photoinitiatoren wie beispielsweise in der EP-A 23623 beschrieben, ausgehärtet werden. Auch so genannte Kombinationshärtungen mit einem für die thermische Härtung verwendeten Peroxidinitiator in Kombination mit Photoinitiatoren sind möglich und haben sich insbesondere bei großen Wandstärken der Auskleidungsschläuche als vorteilhaft erwiesen. Ein Verfahren für eine derartige sogenannte Kombinationshärtung ist beispielsweise in der EP-A 1262708 beschrieben.

Ein strahlungshärtender Auskleidungsschlauch weist üblicherweise eine lichtundurchlässige äußere Schutzfolie, eine mindestens für bestimmte Wellenlängenbereiche elektromagnetischer Strahlung durchlässige Innenfolie sowie eine mit einem Harz getränkte aushärtbare Lage auf, die zwischen der Innenfolie und der Außenfolie angeordnet ist. Der Aussenfolienschlauch soll verhindern, dass das zur Imprägnierung verwendete Harz aus der aushärtbaren Lage austritt und in die Umwelt gelangt. Dies setzt eine gute Dichtigkeit und Anbindung des äußeren Folienschlauchs an die harzgetränkte aushärtbare Lage voraus.

In den Auskleidungsschlauch wird zum Aushärten desselben eine Aushärtevorrichtung eingeführt, die eine Strahlungsquelle aufweist, und die durch den Auskleidungsschlauch geführt wird, um mit der Strahlungsenergie die Aushärtung der aushärtbaren Lagen des Auskleidungsschlauchs zu aktivieren bzw. vorzunehmen. Dabei ist eine vollständige Aushärtung der Auskleidungsschläuche von großer Bedeutung, d.h. es muss eine bestimmte Menge Strahlungsenergie an jeden Punkt des Auskleidungsschlauchs in diesen eingebracht werden. Die Menge an Strahlungsenergie hängt dabei von der Leistungsabgabe der Strahlungsquellen sowie der Geschwindigkeit ab, mit der diese durch den Auskleidungsschlauch durchgeführt werden.

WO2014/114572A1 beispielsweise beschreibt eine Vorrichtung umfassend eine Vorschubeinrichtung und einer Aushärteeinrichtung, zur Aushärtung eines aus härtbaren Auskleidungsschlauches. Gemäß WO2014/096111A1 kann eine solche Aushärteeinrichtung ein Leuchtmittel sein, welches eine durch elektromagnetische Strahlung härtbare Schicht aushärten kann.

Zur Bereitstellung von Strahlungsenergie werden oftmals UV-Strahlungsquellen, auch als UV-Strahler bezeichnet, verwendet. Diese werden auf ziehbaren Vorrichtungen montiert, sogenannten Lichterzügen, die mittels Kabeln oder Zugseilen durch die mit dem Auskleidungsschlauch ausgekleideten Leitungen gezogen werden.

Beim Betrieb von UV-Strahlern, und insbesondere von UV- Niederdruck-Gas-Entladungslampen, sind mehrere Punkte zu beachten. Zunächst ist es vor Inbetriebnahme erforderlich, die Heizwendeln des UV-Strahlers im Sinne einer Schonung vorzuheizen, so dass bereits Elektronen austreten. Danach sollte dem UV-Strahler eine Zündspannung als Impuls zugeführt werden, damit die Ionisierung einsetzen und sich nach einer gewissen Zeit eine leuchtende Gassäule in dem UV-Strahler ausbilden kann, um ultraviolette Strahlen zu erzeugen. Im Betrieb des UV-Strahlers ist es schließlich zwingend erforderlich, den Betriebsstrom im Sinne einer Strombegrenzung zu begrenzen, um eine Zerstörung des UV-Strahlers zu vermeiden. Aufgrund seiner negativen Kennlinie besteht nämlich zwischen der Betriebsspannung und dem Betriebsstrom ein Zusammenhang derart, dass einem größeren Betriebsstrom eine kleinere Betriebsspannung zugeordnet ist.

Bei den oftmals als Strahlungsquelle verwendenten Gasentladungslampem, Kurzbogenlampen, Bogenlampe, insbesondere in Form von Xenon-Lampen, ist somit ein Vorschaltgerät notwendig, dass deren sicheren Betrieb ermöglicht.

Es ist bekannt, die zur Ausbildung der Gassäule erforderliche hohe Zündspannung mit Hilfe einer Induktivität in Form einer Drossel zu erzeugen, die mit normaler Wechselspannung mit 50 Hz betrieben wird und die den Zündimpuls durch einen Schaltvorgang hervorruft, der bei einer Induktivität bekanntlich eine kurzzeitige hohe Spannung entstehen läßt. Nach erfolgter Zündung dient die Drossel zur erforderlichen Strombegrenzung des Betriebsstromes des UV-Strahlers.

Diesen Effekt machen sich konventionelle Vorschaltgeräte zu nutze, die Vorschaltdrossen sind, die bei Netzfrequenz arbeiten und aus einem Eisenkern mit Luftspalt und einer Kupfer- oder Aluminiumlackdraht-Wicklung bestehen. Bedingt durch den ohmschen Widerstand der Wicklung (die sogenannten Kupferverluste) und die Ummagnetisierungs- und im Kern kommt es zu Verlusten von etwa 10-20 % der Lampen-Nennleistung. Es entsteht Wärme in der Drossel.

Solche konventionellen Vorschaltgeräte werden gemäß dem Stand der Technik zur Leistungsbereitstellung für Strahlungsquellen zum Aushärten von Auskleidungsschläuchen verwendendet und stellen den aktuellen Stand der Technik dar.

Ebenso sind aus dem Stand der Technik (WO2008/055366A1 oder auch EP2088837A1) Verfahren zum Betrieb einer UV-Lampe bekannt, wobei ein Zündvorgang an der Lampe von einer Steuerung hinsichtlich mindestens eines der Parameter Temperatur, Spannung und Strom überwacht wird und die Speisespannung und/oder deren Frequenz so eingestellt wird, dass die Lampenparameter eingehalten und die gewünschte Lampenleistung eingestellt wird.

Auch sind aus dem Stand der Technik (WO2011/038974A1) elektronische Vorschaltgeräte zum Betreiben einer Entladungslampe mit einer Steuervorrichtung bekannt, wobei die Steuervorrichtung ausgelegt und eingerichtet ist eine erste Stromfrequenz in Abhängigkeit von einem Schwellenwert zu Steuern und Regeln.

Ebenso wurden steuerbare Silizium-Spannungssteuerungsvorrichtung für UV-Härtungsgerät mit einem guten Wärmeableitungseffekt beschrieben (CN202929509U).

Ein Problem, neben dem schlechten Wirkungsgrad bei dem Einsatz solcher konventionellen Vorschaltgeräte, ist, dass die als Strahlungsquellen eingesetzten Strahlungsquellen, insbesondere in Form von UV-Lampen, einer natürlichen Alterung ausgesetzt sind. Diese Alterung, die mit einer Abnahme der ausgesandten Lichtintensität einhergeht, hängt in erheblichem Umfang von der Anzahl der Schaltzyklen ab, welche die Lampe durchlaufen hat. Daher ist eine generelle Aussage darüber, nach welcher Betriebsdauer die Lampe nicht mehr die zur zuverlässigen Aushärtung erforderliche Lichtintensität ausstrahlt, nicht möglich.

Es ist jedoch entscheidend, dass eine ausreichende Energiemenge von den Strahlungsquellen bereitgestellt wird, um ein sicheres Aushärten der Auskleidungsschläuche zu ermöglichen.

Im Stand der Technik sind für Hochleistungs-Strahlungsquellen auch elektronischen Vorschaltgeräte bekannt, die jedoch nicht im Zusammenhang mit dem Aushärten von Auskleidungsschläuchen verwendet werden. Ein solches elektronisches Vorschaltgerät ist auch mit einer Drossel versehen ist, wird jedoch nicht mit Netzfrequenz, sondern mit Hochfrequenz zwischen 20-50 kHz betrieben. Dabei bildet die Drossel zusammen mit einem in Reihe geschalteten Kondensator und einem parallel zur Strahlungsquelle geschalteten Zündkondensator einen Schwingkreis. Die Zündung über den Zündkondensator erfolgt, wenn sich der Schwingkreis auf seine Resonanzfrequenz aufgeschaukelt hat und die erforderliche hohe Zündspannung erreicht ist. Nach erfolgter Zündung des UV-Strahlers ist der Zündkondensator quasi unwirksam, so daß der UV-Strahler über den Schwingkreis mit der strombegrenzenden Drossel mit dem Betriebsstrom versorgt wird. Dabei arbeitet das elektronische Vorschaltgerät als Wechselrichter, indem die Drossel über elektronische Schalter mit einer impulsförmigen Spannung beaufschlagt wird.

Solche elektronischen Vorschaltgeräte sind jedoch gerade nicht für eine Aushärtevorrichtung zum Aushärten von Auskleidungsschläuchen geeignet. Wie ausgeführt werden zum Aushärten der Auskleidungsschläuche sogenannte Lichterzüge eingesetzt, die durch die z.T. mehrer hundert Meter langen Kanäle gezogen werden. Es ist somit notwendig, die Strahlungsquellen von dem Vorschaltgerät baulich zu trennen, so dass lange elektrische Kabelverbindungen von mehreren hundert Metern zwischen den Strahlungsquellen und dem Vorschaltgerät erforderlich sind, wobei sich diese langen Kabelverbindungen wegen der HF-Speisung und vor allem wegen der Zündung bei den hochfrequenten elektronischen Vorschaltgeräten praktisch nicht realisieren lassen.

Nachteilig an den bekannten Vorrichtungen ist es dabei, dass die derzeit verwendenten konventionellen Vorschaltgeräte nicht die reale Leistungsabgabe der Strahlungsquellen berücksichtigen, die insbesondere im Rahmen des Alterungsprozesses auftreten. Somit ist es derzeit nicht gewährleistet, dass die vorgegebene Soll-Leistung der Strahlungsquellen mit der Ist-Leistung übereinstimmt. Dies führt dazu, dass die Qualität des Aushärtevorgangs der Auskleidungsschläuche nicht gewährleistet ist, da nicht erfassbar ist, ob eine ausreichende Strahlungsenergie bereitgestellt wurde. Zudem ist es nachteilig, dass je nach Anwendungsfall Strahlungsquellen mit unterschiedlicher Leistungsabgabe zum Einsatz kommen, die jeweils ein jeweils angepasstes Vorschaltgerät benötigen.

Daher lag die Aufgabe der vorliegenden Erfindung darin, die Nachteile des Standes der Technik zu überwinden und insbesondere eine Vorrichtung zu liefern, die eine Regelung der realen Leistungsabgabe der Strahlungsenergie der Strahlungsquellen ermöglicht, wobei die Leistungsabgabe aus einem großen Leistungsspektrum ausgewählt werden kann.

Diese Aufgabe wird gelöst durch eine orrichtung zur Aushärtung von harzgetränkten Auskleidungsschläuchen mit energiereicher Strahlung, umfassend mindestens eine Strahlungsquelle zur Erzeugung energiereicher Strahlung und mindestens eine Leistungskontrollvorrichtung zur Regelung der elektrischen Leistungsabgabe an die mindestens eine Strahlungsquelle, wobei mindestens ein Soll-Parameter repräsentativ für die gewünschte elektrische Leistungsaufnahme durch die Strahlungsquelle an der Leistungskontrollvorrichtung einstellbar oder eingestellt ist, und die von der mindestens einen Strahlungsquelle aufgenommene Ist-Leistung mittels einer Messeinrichtung gemessen und permanent mit dem Soll-Parameter verglichen wird, wobei im Falle einer Unterschreitung des Soll-Parameter die Leistungskontrollvorrichtung die Leistungsabgabe erhöht und im Falle einer Überschreitung des Soll-Parameteres reduziert wird, und wobei die tatsächliche Leistungsabgabe der Leistungskontrollvorrichtung von dem vorgegebenen Soll-Parameter abweichen kann, so dass die Ist-Leistung der Strahlungsquelle mit dem Soll-Parameter übereinstimmt.

Erfindungsgemäß umfasst die Vorrichtung zum Aushärten von Auskleidungsschläuchen anstelle eines konventionellen Vorschaltgeräts eine Leistungskontrolleinrichtung. Im Unterschied zu konventionellen Vorschaltgeräten ermöglicht die Leistungskontrolleinrichtung dabei, dass ein Soll-Paramenter für die Leistungsabgabe an die Strahlungsquellen vorgegeben werden kann. Es wird somit möglich, die Energiezufuhr auf die reale Leistungsaufnahme der Strahlungsquellen abzustellen und nicht mit mehr mit vorgegebenen Sollwerten an den Vorschaltgeräten zu arbeiten.

Dies ist vor dem Hintergrund der voranstehend ausgeführten Einflüsse auf die Ist-Leistungsaufnahe abweichend von der Soll-Leistungsaufnahme ein großer Vorteil. Dabei kann es insbesondere vorteilhaft sein, dass die "Soll-Leistungsabgabe" der Leistungskontrolleinrichtung vom dem Ist-Wert abweicht, um sicherzustellen, dass die Ist-Leistungsaufnahme der Strahlungsquellen erreicht wird.

Während bei konventionellen Vorschaltgeräten selbst bei konstanter Eingangsspannung die abgegebene Strahlungsenergie der Strahlungsquellen in Abhängigkeit von Kabellängen, Widerständen und dem jeweiligen Alterungsprozess der Strahlungsquellen varrieren kann, in dem diese einfach weniger Leistung beziehen als notwendig, ohne dass erfassbar ist, ermöglicht die erfindungsgemäße Leistungskontrolleinrichtung somit den vorgegebenen Soll-Parameter der Leistung mit dem realine Ist-Wert der Leistungsaufnahme zu vergleichen und die Ist-Abgabe auf den Soll-Paramenter einzuregeln. Zudem wird erfindungsgemäß verhindert, dass variierende netzsseitige Eingangsspanungen einen weiteren direkten Einfluss auf die Leistungsabgabe der Strahlungsquellen haben.

Die Messeinrichtung ist dabei bevorzugt in Form eines Strommessgeräts ausgebildet, umgangssprachlich auch Amperementer genannt. Solche Strommessgeräte sind dem Fachmann bekannt und können in analoger Form als Drehspulmesswerke, Dreheisenmesswerke oder Hitzedrahtmesswerke ausgebildet sein.

Auch kann die Messeinrichtung bevorzugt in Form eines Messumformers ausgebildet sein. Messumformer sind keine anzeigenden Messgeräte, sondern liefern ein normiertes elektrisches Signal zur zentralen Verarbeitung liefern. Dieses kann analog-technisch ein Einheitsignal sein, z. B. 4 ... 20 mA. Es kann auch ein digitales Ausgangssignal zur Übermittlung über eine Datensammelleitung sein.

Auch kann die erfindungsgemäße Messeinrichtung eine Messung über das Magnetfeld zur Strommessung vornehmen.

Verfahren und Mittel zum Erzwingen der Erhöhung der Leistungsabgabe und zu deren Reduzierung um den Ist-Wert auf den Soll-Parameter einzuregeln sind dem Fachmann ebenfalls bekannt und bedürfen keiner näheren Erläuterungen.

Auch kann es vorteilhaft sein, dass der Soll-Parameter ein Parameter repräsentativ für eine gewünschte Leistungsabgabe der Strahlungsquelle ist und nicht ausschließlich oder kein Grenzwert ist, insbesondere keine Obergrenze oder Untergrenze der Leistungsabgabe, um eine Beschädigung der Strahlungsquelle zu vermeiden.

Des weiteren kann es vorteilhaft sein, dass die Leistungskontrollvorrichtung räumlich getrennt von der Strahlungsquelle angeorndet ist, insbesondere in einem Abstand von mindestens 2 Metern, wobei die Leistungskontrollvorrichtung ausgelegt und eingerichtet ist, die Ist-Leistungsabgabe einer im Abstand von bis zu 200 Metern, insbesondere 500 Metern, bevorzugt 1000 Metern beabstandeten Strahlungsquelle zu regeln.

Die erfindungsgemäße Vorrichtung ist dabei ausgelegt und eingerichtet, um eine Leistungsabgabe in einem breiten Spektrum zu ermöglichen, so dass unterschiedliche Strahlungsquellen mit dieser betrieben werden können. Die Leistungsabgabe der Leistungskontrollvorrichtung ist dabei bevorzugt begrenzt bei maximal 5000W, bevorzugt bei 4000W, wobei die Leistungsabgabe bis zur maximalen Leistungsabgabe frei eingestellt werden kann.

Es kann dabei erfindungsgemäß vorteilhaft sein, dass der Soll-Parameter festlegbare Werte für die Soll-Ausgangspannung, den Soll-Ausgangsstrom, die Soll-Ausgangsleistung und/oder die Soll-Ausgangsfrequenz umfasst.

Alle diese Parameter dienen Festlegung der Leistungsabgabe und der Optimierung des Aushärtevorgangs.

Auch kann vorgesehen sein, dass die Leistungskontrollvorrichtung netzseitig mit einer, insbesondere einphasen oder dreiphasigen, Netzspannung von 230V bis 530V mit einer Netzfrequenz von 48Hz bis 62Hz beaufschlagbar oder beaufschlagt ist und ausgangsseitig eine Spannung von maximal 585V, insbesondere von maximal 450V, und einen Ausgangsstrom von maximal 28,5 Ampere, insbesondere von maximal 22 Ampere, bereitstellt.

Zum Aushärten der Auskleidungsschläuche sind hohe Strahlungsenergien notwendig. Um die benötigten Leistungen bereitzustellen, wird die Leistungskontrollvorrichtung bevozugt auf der netzseitigen Einganseite mit einer, insbesondere einphasigen oder dreiphasigen, Netzspannung von 230V bis 530V beaufschlagt.

Da die Netzfrequenz nicht konstant ist, und durch die Blindstromanteile in ihrer Frequenz verändert wird, die von der primären, sekundären und tertiären Regelenergie im Verbundnetz nicht zu 100% kompensiert werden kann, ist es besonders vorteilhaft, dass die erfindungsgemäße Leistungskontrolleinrichtung ausgelegt und eingerichtet ist, um bei einer variierenden Netzfrequenz zuverlässig die ausgangsseitige Leistungsabgabe gemäß dem Soll-Parameter zu ermöglichen.

Auch hat es sich als besonders vorteilhaft erwiesen, dass die ausgangsseitige Spannung außerhalb des Zündvorgangs, bei dem höhere Spannung bereitgestellt werden können, bei bis zu 585V liegt und die Leistungsabgabe bei bis zu 28,5 Ampere, um die gewünschte Strahlungsenergie bereitzustellen.

Auch hat es sich gemäß einer Ausführungsform als vorteilhaft erwiesen, dass die Leistungskontrollvorrichtung einen Rechteck- und/oder Trapezwechselrichter umfasst und insbesondere ausgangsseitig im AC-Rechteckbetrieb betrieben ist.

Dabei kann es besonders vorteilhfat sein, dass der Rechteck- und/oder Trapezwechselrichter im niederfrequente AC-Rechteckbetrieb oder AC-Trapezbetrieb betrieben ist.

Wie bereits ausgefürt kann es erfindungsgemäß notwendig sein, eine hohe Leistungsabgabe für das Aushärten der Auskleidungsschläuche bereitzustellen. Ein niederfrequent Betrieb bedeutet dabei bevorzugt eine Frequenz von weniger als 250Hz. Ein solcher ermöglicht einen sehr sanften Betrieb der Lampe und eine sehr flexible Prozessführung mit vollständiger Integration aller erforderlichen Bedingungen für einen sicheren Betrieb in einer einzigen Anordnung dank der Spannungs-und Frequenzsteuerung des Umrichters. Es wird dadurch auch möglich, verschiedene Lampentypen und Leistungen mit demselben Konzept zu betreiben. Eine Skalierung der Leistungsklassen mit Standardkomponenten ist somit in einem sehr grossen Bereich gegeben.

Dabei verhindert der niederfreuente Betrieb zudem Verluste durch längere Kabel, da die Übertragungsverluste minimiert werden.

Gemäß einer Ausführungsform der vorliegenden Erfindung hat es sich als vorteilhaft erwiesen, dass die Leistungskontrollvorrichtung einen Mikrocontroller umfasst, der ausgelegt und eingereicht ist, um elektrische Leistungsabgabe an die mindestens eine Strahlungsquelle zu regeln.

Dabei kann insbesondere vorgesehen sein, dass die Steuersignale des Mikrocontrollers potentialgetrennt vom Netz sowie kurzschlussfest ausgeführt sind und insbesondere über eine erdnahe Masse verfügen.

Die Verwendung von Mikrocontroller zur Regelung von technischen Verfahren hat sich seit langem bewährt. Im vorliegenden Fall erfolgt der Einsatz der Leistungskontrolleinrichtung unter erschwerten Bedingungen, da diese nicht einfach in einem Schaltschrank verbaut sind, sondern im Außeneinsatz betrieben werden. Dies führt dazu, dass es besonders vorteilhaft ist, den Mikocontroller gegenüber Störeinflüssen von Außen abzusichern.

Hierzu ist es vorteilhaft, dass die Steuersignale vom Mikrocontroller potentialgetrennt und kurzschlussfest vom Netz ausgeführt werden.

Auch hat es sich als vorteilhaft erwiesen, dass ein Zündgerät für Impulspakete mit bis zu 5000V Sinus- Amplitude von der Leistungskontrollvorrichtung umfasst ist.

Der Zündvorgang kann mit einer separaten Zündanordnung oder mit einem zusätzlichen Zündgerät durch kurzzeitiges Anlegen und Überlagern einer gegenüber der Speisespannung überhöhten Spannung als Spannungsimpuls mit ausreichender Spannungs-Zeitfläche eingeleitet werden.

Die erfindungsgemäße Leistungskontrollvorrichtung mit der angeführten Steuerung der Frequenz und/oder der Ausgangsspannung des Umrichters ermöglicht es, auf ein solches zusätzliches Zündgerät vollständig zu verzichten. Dadurch wird die Anordnung stark vereinfacht und ein sanftes Zünden der Lampe ermöglicht.

Dabei kann es vorgesehen sein, dass die den Strom begrenzenden Mittel eine in Serie geschalteten Drossel umfassen, was den Aufbau der Leistungskontrollvorrichtung weiter vereinfacht und zusätzlich eine Spannungsüberhöhung an der Lampe zum Zünden auf einfache Weise ermöglicht, wenn für den Zündvorgang die elektronische Steuerung jeweils die Frequenz und die Spannung nach vorgegebenen Werten erhöht, bis die Zündung erfolgt.

Der Zündvorgang kann einfach überwacht werden, vorzugsweise durch Messen des Spannungseinbruches und/oder des Stromanstieges an der Strahlungsquelle oder in den Speisezuleitungen oder am Umrichter, oder mit einem Lichtsensor. Sollte die Zündung erfolglos sein, kann je nach Bedarf automatisch ein weiterer Zündvorgang oder deren mehrere eingeleitet werden, bis ein sicherer und stabiler Betriebszustand erreicht wird.

Die Betriebsleistung der Strahlungsquelle wird anschließend wir bereits ausgeführt beispielsweise über die Frequenz entsprechend des Soll-Parameters geregelt.

Es hat sich dabei als besonders vorteilhaft erwiesen, dass als Strahlungsquelle eine Gasentladungslampe, eine Kurzbogenlampe, eine Stroboskoplampe, eine Blitzlampe, eine Bogenlampe, insbesondere eine Xenon-Lampe, und/oder einer Quecksilber-Xenon-Lampe eingesetzt wird, wobei insbesondere wobei das Leuchtmittel mindestens fünfzig Prozent (50%) der Strahlungsenergie in einem Wellenlängenbereich von 351 bis 800 nm, insbesondere in einem Bereich von 380 nm bis 800 nm, insbesondere in einem Bereich von 380 nm bis 700 nm, bevorzugt in einem Bereich von 390 nm bis 470 nm, oder in einem Bereich von 400 nm bis 800 nm, bereitstellt oder bereitstellen kann.

Auch kann es erfindungsgemäß vorgesehen sein, dass die mindestens eine Strahlungsquelle auf einer Transportvorrichtung angeordnet ist, die Räder umfasst, wobei die Transportvorrichtung mittels eines Kabels, insbesondere eines Kabels umfassend Kevlarfasern und/oder mindestens ein Zugseil, und/oder eines Zugseils durch die zu sanierenden Leitung gezogen werden kann, um den Auskleidungsschlauch auszuhärten.

Wie beschrieben werden zum Aushärten von Auskleidungsschläuchen sogenannte Lichterzüge eingesetzt. Diese werden vorzugsweise mittels Kabeln oder Zugseilen durch die Auskleidungsschläuche gezogen, wobei die auf diesen angeordneten Strahlungsquellen während des Durchfahrens der zu sanierenden Leitung den Auskleidungsschlauch Stück für Stück aushärten.

Dabei kann es insbesondere vorgesehen sein, dass die Leistungskontrollvorrichtung die Geschwindigkeit des Vortriebs der Transportvorrichtung und den zurückgelegten Weg erfasst und insbesondere die Position der Transportvorrichtung in der zu sanierenden Leitung bestimmt.

Die abgegebene Strahlungsenergie zum Aushärten des Auskleidungsschlauchs an einem Ort richtet sich nicht nur nach der Leistung der Strahlungsquellen, sondern auch nach der Beleuchtungszeit. Daher ist es vorteilhaft, die Geschwindigkeit des Vortriebs der Strahlungsquelle zu erfassen.

Auch kann es vorgesehen sein, dass die Leistungskontrollvorrichtung die Geschwindigkeit des Vortriebs, die Position der Transportvorrichtung in der zu sanierenden Leitung und/oder die abgegeben Ist-Leistung der Strahlungsquelle speichert.

Eine solche Aufzeichnung von Messdaten ist besonders vorteilhaft, um den korrekten Aushärteprozess zu dokumentieren.

Des weiteren kann es vorgesehen sein, dass die Transportvorrichtung mindestens eine Temperaturmesseinrichtung umfasst, insbesondere mindestens jeweils eine Temperaturmesseinrichtung angeordnet am vorderen Ende, am hinteren Ende und in der Mitte der Transportvorrichtung, wobei die Messwerte der mindestens einen Temperaturmessvorrichtung an die Leistungskontrollvorrichtung übermittelt werden.

Die erfindungsgemäßen Temperaturmessvorrichtungen ermöglichen die Erfassung der Temperatur im Inneren des Auskleidungsschlauchs und unterstützen die Steuerung oder Regelung des Aushärtevorgangs.

Auch kann vorgesehen sein, dass die Transportvorrichtung mindestens eine Druckmessvorrichtung umfasst, um den Druck im Inneren des Auskleidungsschlauchs zu messen, wobei die Messwerte der mindestens einen Druckmessvorrichtung an die Leistungskontrollvorrichtung übermittelt werden.

Wie ausgeführt werden die Auskleidungsschläuche mittels eines unter Druck stehenden Fluids vor der Aushärtung expandiert. Ein Erfassen diese Werte dient ebenfalls der Unterstützung und Kontrolle des Aushärtevorgangs.

Schließlich kann vorgesehen sein, dass die Geschwindigkeit des Vortriebs der Transportvorrichtung, der zurückgelegten Weg, die Messwerte der mindestens einen Temperaturmessvorrichtung, die Messwerte der Druckmessvorrichtung, der Soll-Parameter und/oder die Ist-Leistungsabgabe der mindestens einen Strahlungsquelle auf einer Anzeigeeinrichtung anzeigbar und insbesondere speicherbar und druckbar sind.

Durch ein solches Anzeigen und Speichern bzw. optionales Drucken wird es dem Benutzer ermöglicht, direkt den Aushärtevorgang zu überwachen und zu protokollieren. Gemäß dem Stand der Technik werden dem Benutzer derzeit ausschließlich Statusinformationen über die Strahlungsquellen bereitgestellt, nicht jedoch deren konkrete Leistungsabgabe. Erfindungsgemäß wird nunmehr genau die real abgegeben Leistung jeder der Strahlungsquellen dem Benutzer angezeigt und protokolliert, so dass direkt ersichtlich ist, ob der Aushärtevorgang korrekt ausgeführt wird.

Auch liefert die vorliegenden Erfindung ein Verfahren zum Sanieren von Leitungen, insbesondere von Kanälen, Schächten, oder dergleichen, umfassend die folgenden Verfahrensschritte, insbesondere in dieser Reihenfolge:
a) Bereitstellen einer Vorrichtung nach einem der vorangehenden Ansprüche;
b) Vorgeben eines Soll-Parameters repräsentativ für die gewünschte Leistungsaufnahme der Strahlungsquelle an der Leistungskontrollvorrichtung;
c) Permanentes Erfassen des Ist-Wertes der Leistungsaufnahme an der Strahlungsquelle und Vergleichen der Ist-Leistungsaufnahme mit dem Soll-Parameter mittels der Leistungskontrolleinrichtung; und parallel zu Schritt c)
d) Bei einem Unterschreiten des Soll-Parameters durch die Ist-Leistungsabgabe wird die Ist-Leistungsabgabe der Leistungskontrollvorrichtung erhöht oder
   bei einem Überschreiten des Soll-Parameters durch die Ist-Leistungsabgabe wird die Ist-Leistungsabgabe der Leistungskontrollvorrichtung reduziert; jeweils bis die Ist-Leistungsabgabe dem Soll-Parameter entspricht, wobei die tatsächliche Leistungsabgabe der Leistungskontrollvorrichtung von dem vorgegebenen Soll-Parameter abweichen kann, so dass die Ist-Leistung der Strahlungsquelle mit dem Soll-Parameter übereinstimmt.

Gemäß dem erfindungsgemäßen Verfahren werden somit die eingegebenen Soll-Parameter laufend mit den realen Ist-Leistungen der Leistungskontrollvorrichtung verglichen und die Ist-Werte entsprechend des Soll-Parameters eingeregelt. Somit kann sichergestellt werden, dass unabhängig von äußeren Einflüssen, wie schwankende Netzspannungen, Kabellängen, oder Alterungsprozesse in den Strahlungsquellen grundsätzlich die geplante und vorgegebene Strahlungsenerige abgegeben wird.

Weiterhin kann vorgesehesn sein, dass das erfindungsgemäße die folgenden Schritte umfasst, insbesondere insbesondere vor Schritt c) :
e) Einführen eines Auskleidungsschlauchs in die Leitung, wobei der Auskleidungsschlauch mindestens eine durch eine Aktivierung aushärtbare und/oder aushärtende Lage, eine Außen um die aushärtbare Lage angeordnete Außenfolie und eine Temperaturmessvorrichtung, die zwischen der aushärtbaren Lage und der Außenfolie angeordnet ist, umfasst;
f) Einbringen der Vorrichtung in den Auskleidungsschlauch;
g) Expandieren des Auskleidungsschlauchs, insbesondere mittels eines Fluids, vorzugsweise Druckluft, so dass der Auskleidungsschlauch an der Innenwand der Leitung anliegt;

Schließlich kann vorgesehen sein, dass das erfindungsgemäße Verfahren auch die folgenden Schritte umfasst, insbesondere nach Schritt g) und parallel zu den Schritten c) und d)
h) Fortbewegen der Aushärtevorrichtung durch das Leitungssystem, wobei die mindestens eine Strahlungsquelle zum Aushärten der aushärtbaren und/oder aushärtenden Lage aktiviert wird oder ist, wobei die Fortbewegung der Vorrichtung in dem Auskleidungsschlauch in Abhängigkeit der Ist-Leistungsabgabe der Strahlungsquelle geregelt wird.

Der Erfindung liegt dabei die überraschende Erkenntnis zugrunde, dass mittels einer erfindungsgemäßen Vorrichtung ein Aushärtevorgang optimiert werden kann, in dem anstelle einer bloßen Festelegung von Soll-Parametern der Leistungsabgabe der Strahlungsquellen die Ist-Werte erfasst und zur Regelung des Aushärtevorgangs berücksichtigt werden. Dies erfolgt zum einen, in dem die Ist-Wert zum Einregeln der korrekten Leistungsabgabe der Strahlungsquellen verwendet werden können, und zum anderen, dass insbesondere der Vortrieb der Strahlungsquellen in Abhängigkeit der realen Leistungsabgabe geregelt werden kann. Wird beispielsweise festgestellt, dass aufgrund einer Abweichung der Ist-Werte der Leistungsabgabe der Strahlungsquellen von dem Soll-Parameter eine unzureichende Energieabstrahlung in einem Abschnitt des Auskleidungsschlauchs droht, und dieser somit ggf. nicht ausreichend durchgehärtet wird, wird zum Einen die Ist-Leistung der Strahlungsquellen erhöht, zum anderen kann der Vortrieb reduziert werden.

Durch die Erfassung aller relevanter Parameter, insbesondere der Ist-Leistungsabgabe, der Position der Strahlungsquelle, deren Vortrieb, der Temperatur und dem Druck in dem Auskleidungsschlauch wird der Aushärtevorgang selbst umfassend dokumentiert und protokolliert und der Nachweiß der korrekten Aushärtung kann jederzeit erbracht werden.

Auch liefert die Erfindung eine Verwendung einer erfindungsgemäßen Vorrichtung für eine Regelung der Leistungsabgabe von Strahlungsquellen zum Aushärten von Auskleidungsschläuchen.

Die in der voranstehenden Beschreibung und den Ansprüchen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Vorrichtung zur Aushärtung von harzgetränkten Auskleidungsschläuchen mit energiereicher Strahlung, umfassend mindestens eine Strahlungsquelle zur Erzeugung energiereicher Strahlung und mindestens eine Leistungskontrollvorrichtung zur Regelung der elektrischen Leistungsabgabe an die mindestens eine Strahlungsquelle, wobei mindestens ein Soll-Parameter repräsentativ für die gewünschte elektrische Leistungsaufnahme durch die Strahlungsquelle an der Leistungskontrollvorrichtung einstellbar oder eingestellt ist, und die von der mindestens einen Strahlungsquelle aufgenommene Ist-Leistung mittels einer Messeinrichtung gemessen und permanent mit dem Soll-Parameter verglichen wird, wobei im Falle einer Unterschreitung des Soll-Parameter die Leistungskontrollvorrichtung die Leistungsabgabe erhöht und im Falle einer Überschreitung des Soll-Parameteres reduziert wird, und/oder die Fortbewegung der Vorrichtung in dem Auskleidungsschlauch in Abhängigkeit der Ist-Leistungsabgabe der Strahlungsquelle geregelt wird, , und wobei die tatsächliche Leistungsabgabe der Leistungskontrollvorrichtung von dem vorgegebenen Soll-Parameter abweichen kann, so dass die Ist-Leistung der Strahlungsquelle mit dem Soll-Parameter übereinstimmt, und wobei
der Soll-Parameter festlegbare Werte für die Soll-Ausgangspannung, den Soll-Ausgangsstrom, die Soll-Ausgangsleistung und/oder die Soll-Ausgangsfrequenz umfasst.

2. Vorrichtung nach Anspruch 1, **dadurch gekennzeichnet, dass**
der Soll-Parameter ein Parameter repräsentativ für eine gewünschte Leistungsabgabe der Strahlungsquelle ist und nicht ausschließlich oder kein Grenzwert ist, insbesondere keine Obergrenze oder Untergrenze der Leistungsabgabe, um eine Beschädigung der Strahlungsquelle zu vermeiden.

3. Vorrichtung nach einem der vorangehenden Ansprüche 1 und 2, **dadurch gekennzeichnet, dass**
die Leistungskontrollvorrichtung räumlich getrennt von der Strahlungsquelle angeordnet ist, insbesondere in einem Abstand von mindestens 2 Metern, wobei die Leistungskontrollvorrichtung ausgelegt und eingerichtet ist, die Ist-Leistungsabgabe einer im Abstand von bis zu 200 Metern, insbesondere 500 Metern, bevorzugt 1000 Metern beabstandeten Strahlungsquelle zu regeln.

4. Vorrichtung nach einem der vorangehenden Ansprüche, **dadurch gekennzeichnet, dass**
die Leistungskontrollvorrichtung netzseitig mit einer, insbesondere dreiphasigen, Netzspannung von 300V bis 530V mit einer Netzfrequenz von 48Hz bis 62Hz beaufschlagbar oder beaufschlagt ist und ausgangsseitig eine Spannung von maximal 585V, insbesondere von maximal 450V, und einen Ausgangsstrom von maximal 28,5 Ampere, insbesondere von maximal 22 Ampere, bereitstellt.

5. Vorrichtung nach einem der vorangehenden Ansprüche, **dadurch gekennzeichnet, dass**
die Leistungskontrollvorrichtung einen Rechteck- und/oder Trapezwechselrichter umfasst und insbesondere ausgangsseitig im AC-Rechteckbetrieb betrieben ist, wobei
der Rechteck- und/oder Trapezwechselrichter im niederfrequente AC-Rechteckbetrieb oder AC-Trapezbetrieb betrieben ist.

6. Vorrichtung nach einem der vorangehenden Ansprüche, **dadurch gekennzeichnet, dass**
die Leistungskontrollvorrichtung einen Mikrocontroller umfasst, der ausgelegt und eingereicht ist, um elektrische Leistungsabgabe an die mindestens eine Strahlungsquelle zu regeln.

7. Vorrichtung nach Anspruch 6, **dadurch gekennzeichnet, dass**
die Steuersignale des Microcontrollers potentialgetrennt vom Netz sowie kurzschlussfest ausgeführt sind und insbesondere über eine erdnahe Masse verfügen.

8. Vorrichtung nach einem der vorangehenden Ansprüche, **dadurch gekennzeichnet, dass**
ein Zündgerät für Impulspakete mit bis zu 5000V Sinus- Amplitude von der Leistungskontrollvorrichtung umfasst ist, wobei
die Leistungskontrollvorrichtung die Geschwindigkeit des Vortriebs der Transportvorrichtung und den zurückgelegten Weg erfasst und insbesondere die Position der Transportvorrichtung in der zu sanierenden Leitung bestimmt.

9. Vorrichtung nach einem der vorangehenden Ansprüche, **dadurch gekennzeichnet,**
**dass**
die Leistungskontrollvorrichtung die Geschwindigkeit des Vortriebs, die Position der Transportvorrichtung in der zu sanierenden Leitung und/oder die abgegeben Ist-Leistung der Strahlungsquelle speichert.

10. Vorrichtung nach einem der Ansprüche 8 oder 9, **dadurch gekennzeichnet, dass**
die Transportvorrichtung mindestens eine Temperaturmesseinrichtung umfasst, insbesondere mindestens jeweils eine Temperaturmesseinrichtung angeordnet am vorderen Ende, am hinteren Ende und in der Mitte der Transportvorrichtung, wobei die Messwerte der mindestens einen Temperaturmessvorrichtung an die Leistungskontrollvorrichtung übermittelt und insbesondere gespeichert werden.

11. Vorrichtung nach einem der Ansprüche 8 bis 10, **dadurch gekennzeichnet, dass**
die Geschwindigkeit des Vortriebs der Transportvorrichtung, der zurückgelegten Weg, die Messwerte der mindestens einen Temperaturmessvorrichtung, die Messwerte der Druckmessvorrichtung, der Soll-Parameter und/oder die Ist-Leistungsabgabe der mindestens einen Strahlungsquelle auf einer Anzeigeeinrichtung anzeigbar und insbesondere speicherbar und druckbar sind.

12. Verfahren zum Sanieren von Leitungen, insbesondere von Kanälen, Schächten, oder dergleichen, umfassend die folgenden Verfahrensschritte, insbesondere in dieser Reihenfolge:
a) Bereitstellen einer Vorrichtung nach einem der vorangehenden Ansprüche;
b) Vorgeben eines Soll-Parameters repräsentativ für die gewünschte Leistungsaufnahme der Strahlungsquelle an der Leistungskontrollvorrichtung;
c) Permanentes Erfassen des Ist-Wertes der Leistungsaufnahme an der Strahlungsquelle und Vergleichen der Ist-Leistungsaufnahme mit dem Soll-Parameter mittels der Leistungskontrolleinrichtung; und parallel zu Schritt c)
d) Bei einem Unterschreiten des Soll-Parameters durch die Ist-Leistungsabgabe wird die Ist-Leistungsabgabe der Leistungskontrollvorrichtung erhöht oder
bei einem Überschreiten des Soll-Parameters durch die Ist-Leistungsabgabe wird die Ist-Leistungsabgabe der Leistungskontrollvorrichtung reduziert; jeweils bis die Ist-Leistungsabgabe dem Soll-Parameter entspricht, wobei die tatsächliche Leistungsabgabe der Leistungskontrollvorrichtung von dem vorgegebenen Soll-Parameter abweichen kann, so dass die Ist-Leistung der Strahlungsquelle mit dem Soll-Parameter übereinstimmt,
und weiterhin umfassend den folgenden Schritt, insbesondere parallel zu den Schritten c) und d):
h) Fortbewegen der Aushärtevorrichtung durch das Leitungssystem, wobei die mindestens eine Strahlungsquelle zum Aushärten der aushärtbaren und/oder aushärtenden Lage aktiviert wird oder ist, wobei die Fortbewegung der Vorrichtung in dem Auskleidungsschlauch in Abhängigkeit der Ist-Leistungsabgabe der Strahlungsquelle geregelt wird.

13. Verfahren nach Anspruch 12, weiterhin umfassend die folgenden Schritte, insbesondere vor Schritt c) :
e) Einführen eines Auskleidungsschlauchs in die Leitung, wobei der Auskleidungsschlauch mindestens eine durch eine Aktivierung aushärtbare und/oder aushärtende Lage, eine Außen um die aushärtbare Lage angeordnete Außenfolie und eine Temperaturmessvorrichtung, die zwischen der aushärtbaren Lage und der Außenfolie angeordnet ist, umfasst;
f) Einbringen der Vorrichtung in den Auskleidungsschlauch;
g) Expandieren des Auskleidungsschlauchs, insbesondere mittels eines Fluids, vorzugsweise Druckluft, so dass der Auskleidungsschlauch an der Innenwand der Leitung anliegt.

14. Verwendung einer Vorrichtung nach einem der Ansprüche 1 bis 11 für eine Regelung der Leistungsabgabe von Strahlungsquellen zum Aushärten von Auskleidungsschläuchen.

## Claims

1. A device for curing resin-impregnated lining tubes with high-energy radiation, comprising at least one radiation source for generating high-energy radiation and at least one power control device for regulating the electrical power output to the at least one radiation source, wherein at least one setpoint parameter representative of the desired electrical power consumption by the radiation source is settable or set at the power control device, and the actual power consumed by the at least one radiation source is measured by means of a measuring device and is permanently compared with the setpoint parameter, wherein, in the case where the setpoint parameter is undershot, the power control device increases the power output and, in the case where the setpoint parameter is exceeded, the power output is reduced, and/or the movement of the device in the lining tube is regulated depending on the actual power output of the radiation source, and wherein the actual power output of the power control device can deviate from the predefined setpoint parameter, such that the actual power of the radiation source corresponds to the setpoint parameter, and wherein the setpoint parameter comprises definable values for the setpoint output voltage, the setpoint output current, the setpoint output power and/or the setpoint output frequency.

2. The device according to claim 1, **characterized in that** the setpoint parameter is a parameter representative of a desired power output of the radiation source and is not exclusively or is not a limit value, in particular an upper limit or lower limit of the power output, in order to avoid damage to the radiation source.

3. The device according to any one of the preceding claims 1 and 2, **characterized in that** the power control device is arranged spatially separated from the radiation source, in particular at a distance of at least 2 meters, wherein the power control device is designed and configured to regulate the actual power output of a radiation source spaced at a distance of up to 200 meters, in particular 500 meters, preferably 1000 meters.

4. The device according to any one of the preceding claims, **characterized in that** the power control device is able to be supplied with a power supply system voltage on the supply side, in particular a three-phase power supply system voltage of 300V to 530V with a power supply system frequency of 48Hz to 62Hz, and on the output side, said power control device provides a voltage of a maximum of 585V, in particular of a maximum of 450V, and an output current of a maximum of 28.5 amperes, in particular of a maximum of 22 amperes.

5. The device according to any one of the preceding claims, **characterized in that** the power control device comprises a rectangular and/or trapezoidal inverter and is operated in AC rectangular operation, in particular on the output side, wherein the rectangular and/or trapezoidal inverter is operated in low-frequency AC rectangular operation or AC trapezoidal operation.

6. The device according to any one of the preceding claims, **characterized in that** the power control device comprises a microcontroller designed and configured to regulate the electrical power output to the at least one radiation source.

7. The device according to claim 6, **characterized in that** the control signals of the microcontroller are embodied such that they are potential-isolated from the power supply system and short-circuit-proof and have, in particular, a near-earth ground.

8. The device according to any one of the preceding claims, **characterized in that** it comprises an ignition unit for pulse bursts having a sinusoidal amplitude of up to 5000V, wherein the power control device detects the speed of advance of the transport device and the distance covered and determines, in particular, the position of the transport device in the line to be renovated.

9. The device according to any one of the preceding claims, **characterized in that** the power control device stores the speed of advance, the position of the transport device in the line to be renovated, and/or the output actual power of the radiation source.

10. The device according to any one of claims 8 or 9, **characterized in that** the transport device comprises at least one temperature measuring device, in particular at least one temperature measuring device in each case arranged at the front end, at the rear end and in the center of the transport device, wherein the measurement values of the at least one temperature measuring device are communicated to the power control device and are stored, in particular.

11. The device according to any one of claims 8 to 10, **characterized in that** the transport device comprises at least one pressure measuring device in order to measure the pressure in the interior of the lining tube, wherein the measurement values of the at least one pressure measuring device are communicated to the power control device and are stored, in particular.

12. A method for renovating lines, in particular ducts, shafts, or the like, comprising the following method steps, in particular in this order:
a) providing a device according to any one of the preceding claims;
b) predefining a setpoint parameter representative of the desired power consumption of the radiation source at the power control device;
c) permanently detecting the actual value of the power consumption at the radiation source and comparing the actual power consumption with the setpoint parameter by means of the power control device; and parallel to step c)
d) in the case where the actual power output undershoots the setpoint parameter, the actual power output of the power control device is increased or, in the case where the actual power output exceeds the setpoint parameter, the actual power output of the power control device is reduced; in each case until the actual power output corresponds to the setpoint parameter, wherein the actual power output of the power control device can deviate from the predefined setpoint parameter, such that the actual power of the radiation source corresponds to the setpoint parameter, and further comprising the following step, in particular parallel to steps c) and d):
h) propelling the curing device through the line system, wherein the at least one radiation source is or has been activated for the purpose of curing the curable and/or curing layer, wherein the propulsion of the device in the lining tube is regulated depending on the actual power output of the radiation source.

13. The method according to claim 12, further comprising the following steps, in particular before step c):
e) inserting a lining tube into the line, wherein the lining tube comprises at least one layer that is curable and/or cures as a result of an activation, an outer film arranged on the exterior around the curable layer, and a temperature measuring device arranged between the curable layer and the outer film;
f) introducing the device into the lining tube;
g) expanding the lining tube, in particular by means of a fluid, preferably compressed air, such that the lining tube bears against the inner wall of the line.

14. The use of a device according to any one of claims 1 to 11 for regulating the power output of radiation sources for curing lining tubes.

## Revendications

1. Dispositif de durcissement de tubes de revêtement imprégnés de résine par rayonnement haute énergie, comprenant au moins une source de rayonnement pour générer un rayonnement haute énergie et au moins un dispositif de commande de puissance pour réguler la sortie électrique vers ladite source, dans lequel au moins un paramètre de consigne représentatif de la consommation électrique souhaitée par la source est réglable ou réglé sur le dispositif de commande, et la puissance réellement consommée par ladite source est mesurée au moyen d'un dispositif de mesure et est comparée en permanence avec le paramètre de consigne, où, dans le cas où le paramètre de consigne est sous-estimé, le dispositif de commande augmente la sortie de puissance et, dans le cas où le paramètre de consigne est dépassé, la sortie de puissance est réduite, et/ou le mouvement du dispositif dans le tube de revêtement est régulé en fonction de la sortie de puissance réelle de la source de rayonnement, et où la sortie de puissance réelle du dispositif de commande peut s'écarter du paramètre de consigne prédéfini, de sorte que la puissance réelle de la source de rayonnement correspond au paramètre de consigne, et où le paramètre de consigne comprend des valeurs définissables pour la tension de sortie, le courant de sortie, la puissance de sortie et/ou la fréquence de sortie.

2. Le dispositif selon la revendication 1, **caractérisé en ce que** le paramètre de consigne est un paramètre représentatif d'une puissance de sortie souhaitée de la source de rayonnement et n'est pas exclusivement ou n'est pas une valeur limite, en particulier une limite supérieure ou inférieure de la puissance de sortie, afin d'éviter d'endommager la source de rayonnement.

3. Le dispositif selon l'une quelconque des revendications précédentes 1 et 2, **caractérisé en ce que** le dispositif de commande de puissance est disposé spatialement séparé de la source de rayonnement, en particulier à une distance d'au moins 2 mètres, où le dispositif de commande de puissance est conçu et configuré pour réguler la sortie de puissance réelle d'une source de rayonnement espacée d'une distance allant jusqu'à 200 mètres, en particulier 500 mètres, de préférence 1000 mètres.

4. Le dispositif selon l'une quelconque des revendications précédentes, **caractérisé en ce que** le dispositif de commande de puissance peut être alimenté avec une tension de système d'alimentation du côté alimentation, en particulier une tension de système d'alimentation triphasée de 300V à 530V avec une fréquence de système d'alimentation de 48Hz à 62Hz, et du côté sortie, ledit dispositif de commande de puissance fournit une tension maximale de 585V, en particulier d'un maximum de 450V, et un courant de sortie maximal de 28,5 ampères, en particulier d'un maximum de 22 ampères.

5. Le dispositif selon l'une quelconque des revendications précédentes, **caractérisé en ce que** le dispositif de commande de puissance comprend un onduleur rectangulaire et/ou trapézoïdal et est exploité en fonctionnement rectangulaire AC, en particulier du côté sortie, l'onduleur rectangulaire et/ou trapézoïdal étant exploité en fonctionnement rectangulaire AC à basse fréquence ou en fonctionnement trapézoïdal AC.

6. Le dispositif selon l'une quelconque des revendications précédentes, **caractérisé en ce que** le dispositif de commande de puissance comprend un microcontrôleur conçu et configuré pour réguler la sortie électrique vers ladite source de rayonnement.

7. Le dispositif selon la revendication 6, **caractérisé en ce que** les signaux de commande du microcontrôleur sont conçus de manière à être isolés du système d'alimentation et à l'épreuve des courts-circuits et ont, en particulier, une masse proche de la terre.

8. Le dispositif selon l'une quelconque des revendications précédentes, **caractérisé en ce qu'**il comprend une unité d'allumage pour des salves d'impulsions ayant une amplitude sinusoïdale allant jusqu'à 5000V, le dispositif de commande de puissance détectant la vitesse d'avancement du dispositif de transport et la distance parcourue et déterminant, en particulier, la position du dispositif de transport dans la ligne à rénover.

9. Le dispositif selon l'une quelconque des revendications précédentes, **caractérisé en ce que** le dispositif de commande de puissance stocke la vitesse d'avancement, la position du dispositif de transport dans la ligne à rénover, et/ou la puissance de sortie réelle de la source de rayonnement.

10. Le dispositif selon l'une quelconque des revendications 8 ou 9, **caractérisé en ce que** le dispositif de transport comprend au moins un dispositif de mesure de température, en particulier au moins un dispositif de mesure de température disposé respectivement à l'extrémité avant, à l'extrémité arrière et au centre du dispositif de transport, les valeurs de mesure du ou des dispositifs de mesure de température étant communiquées au dispositif de commande de puissance et étant stockées, en particulier.

11. Le dispositif selon l'une quelconque des revendications 8 à 10, **caractérisé en ce que** le dispositif de transport comprend au moins un dispositif de mesure de pression afin de mesurer la pression à l'intérieur du tube de revêtement, les valeurs de mesure du ou des dispositifs de mesure de pression étant communiquées au dispositif de commande de puissance et étant stockées, en particulier.

12. Procédé de rénovation de lignes, en particulier de conduits, d'arbres, ou similaires, comprenant les étapes de procédé suivantes, en particulier dans cet ordre :
a) fournir un dispositif selon l'une quelconque des revendications précédentes ;
b) prédéfinir un paramètre de consigne représentatif de la consommation de puissance souhaitée de la source de rayonnement sur le dispositif de commande de puissance ;
c) détecter en permanence la valeur réelle de la consommation de puissance au niveau de la source
de rayonnement et comparer la consommation de puissance réelle avec le paramètre de consigne au moyen du dispositif de commande de puissance ; et en parallèle de l'étape c)
d) dans le cas où la puissance de sortie réelle est inférieure au paramètre de consigne, la puissance de sortie réelle du dispositif de commande de puissance est augmentée ou, dans le cas où la puissance de sortie réelle dépasse le paramètre de consigne, la puissance de sortie réelle du dispositif de commande de puissance est réduite ; dans chaque cas jusqu'à ce que la puissance de sortie réelle corresponde au paramètre de consigne, la puissance de sortie réelle du dispositif de commande de puissance pouvant s'écarter du paramètre de consigne prédéfini, de sorte que la puissance réelle de la source de rayonnement corresponde au paramètre de consigne, et comprenant en outre l'étape suivante, en particulier en parallèle des étapes c) et d) :
h) propulser le dispositif de durcissement à travers le système de ligne, où ladite source de rayonnement est ou a été activée pour durcir la couche durcissable et/ou durcie, où la propulsion du dispositif dans le tube de revêtement est régulée en fonction de la sortie de puissance réelle de la source de rayonnement.

13. Le procédé selon la revendication 12, comprenant en outre les étapes suivantes, en particulier avant l'étape c) :
e) insérer un tube de revêtement dans la ligne, ledit tube de revêtement comprenant au moins une couche durcissable et/ou durcie à la suite d'une activation, un film externe disposé sur l'extérieur autour de la couche durcissable, et un dispositif de mesure de température disposé entre la couche durcissable et le film externe ;
f) introduire le dispositif dans le tube de revêtement ;
g) étendre le tube de revêtement, en particulier au moyen d'un fluide, de préférence de l'air comprimé, de telle sorte que le tube de revêtement s'appuie contre la paroi intérieure de la ligne.

14. Utilisation d'un dispositif selon l'une quelconque des revendications 1 à 11 pour réguler la sortie de puissance des sources de rayonnement pour durcir les tubes de revêtement.
